# FASCICULE DE BREVET EUROPEEN

(11) **EP 2 140 406 B1**
(45) Date de publication et mention de la délivrance du brevet: **14.05.2014**
(21) Numéro de dépôt: 08717373.8
(22) Date de dépôt: 04.03.2008
(51) Int. Cl.: G06K 19/077

(54) **CARTE INCORPORANT UN AFFICHAGE ELECTRONIQUE**
KARTE MIT DIGITALEM DISPLAY
CARD WITH DIGITAL DISPLAY

(30) Priorité: 19.03.2007 EP 07104420
(43) Date de publication de la demande: 06.01.2010
(73) Titulaire: NagraID, 2301 La Chaux-de-Fonds (CH)
(72) Inventeur: DROZ, François, CH-2035 Corcelles (CH)
(74) Mandataire: Surmely, Gérard
(86) Numéro de dépôt international: PCT/EP2008/052613
(87) Numéro de publication internationale: WO 2008/113677

(56) Documents cités:
- EP-A- 1 437 683
- US-A- 5 026 452
- US-A1- 2005 045 729
- US-B1- 6 176 430
- US-B1- 6 293 470

## Description

### Domaine technique

La présente invention concerne une carte incorporant un affichage électronique. Cet affichage électronique est associé en général à un circuit électronique de traitement de données et, dans certaines variantes, à un interrupteur ou un capteur permettant à un utilisateur d'activer une certaine fonction. L'affichage électronique permet notamment d'afficher des codes variables et autres données permettant d'augmenter la sécurité de cartes du type bancaire ou d'accès sécurisé par exemple. L'intégration d'un affichage électronique dans une carte engendre une contrainte particulière pour sa fabrication étant donné que la carte doit être transparente au-dessus de cet affichage. Le module d'affichage électronique est situé à l'intérieur de la carte selon l'invention. Ainsi, ce module d'affichage est recouvert par au moins une couche supérieure externe de protection.

### Arrière-plan technologique

Selon une méthode avantageuse de fabrication de cartes incorporant divers éléments électroniques, il est prévu d'enrober ces éléments électroniques dans une résine formant un noyau ou une couche intermédiaire de la carte. Le document EP 0 570 784 décrit de manière générale un tel procédé de fabrication. Pour obtenir un noyau ayant des surfaces planes et uniformes, il est préférable d'enrober l'ensemble des éléments électroniques incorporés dans la carte et ainsi de recouvrir l'affichage électronique par la résine d'enrobage. Dans ce dernier mode de mise en oeuvre, la résine doit être transparente au moins dans la région de l'affichage. La transparence de la résine pose un problème pour obtenir une impression de bonne qualité, en particulier sur la face supérieure de la carte où l'affichage apparait. De fait, elle engendre un double problème. De manière générale, l'impression de motifs sur une couche transparente engendre une diminution du contraste et aussi de l'intensité des couleurs, lesquelles ont un aspect translucide. Deuxièmement, la présence de divers éléments électroniques dans le noyau transparent engendre des variations de la lumière réfléchie par le noyau, ce qui donne des zones plus ou moins sombres sur les faces du noyau. Le support sur lequel est prévue l'impression d'un motif n'est donc pas optiquement uniforme, ce qui engendre généralement des variations de contraste et également des variations d'intensités des couleurs du côté de la face supérieure de la carte terminée.

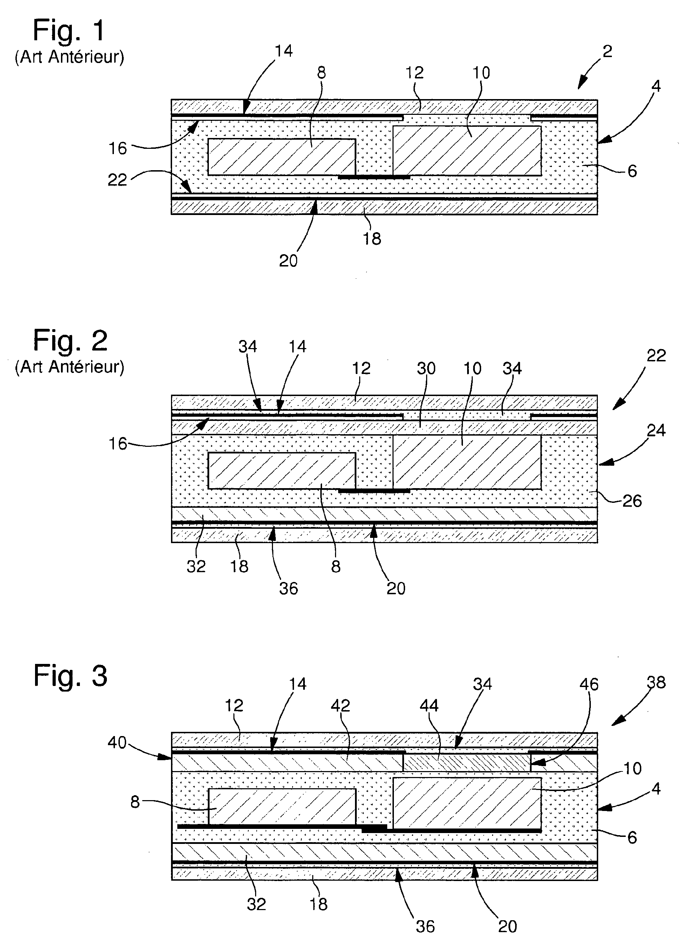

Pour résoudre le problème susmentionné, il a été prévu, dans des cartes réalisées antérieurement, de déposer sous les motifs imprimés, relativement au noyau de la carte, une encre ou un verni de couleur claire, de préférence blanche, par une technique de sérigraphie pour que la fine couche d'encre ou de verni ait une certaine épaisseur. Deux variantes de cartes réalisées selon cette technique sont représentées aux figures 1 et 2.

La carte 2 de la figure 1 est formée d'un noyau 4 dans lequel sont incorporés une unité électronique 8 et un affichage électronique 10. Ces éléments électroniques 8 et 10 sont noyés dans une résine transparente 6 formant le noyau 4, lequel est réalisé dans une première étape du procédé de fabrication de telles cartes. Le noyau 4 est formé par une technique connue de l'homme du métier, notamment dans une presse ou par injection de la résine dans un moule. Ensuite, il est prévu d'agencer du côté de la face supérieure du noyau un film transparent 12 à la surface inférieure duquel est imprimé un motif 14. Pour obtenir une impression de bonne qualité, c'est-à-dire à haute définition, les motifs imprimés 14 sont obtenus de préférence par une technique du type Offset. Ensuite, selon ce procédé antérieur, on imprime sur le motif 14 une couche d'encre ou de verni 16. Cette couche 16 est prévue de préférence de couleur blanche et elle s'étend sur toute la surface inférieure du film transparent 12 à l'exception de la région d'affichage située au-dessus de l'affichage électronique 10. La couche 16 définit ainsi une fenêtre à travers laquelle l'affichage électronique 10 est visible.

De même, du côté de la face inférieure de la carte 2, il est prévu d'agencer un film transparent 18 à la surface supérieure duquel est imprimé un motif 20. Ce motif 20 est recouvert par une couche d'encre ou de verni 22. La couche 22 est également déposée de préférence par sérigraphie. Cependant on notera que les couches de fond 16 et 22 peuvent être déposées par diverses techniques.

La carte 22 selon la variante représentée à la figure 2 comprend un noyau 24 formé d'une résine ou d'un matériau quelconque 26. Le noyau 24 se distingue du noyau 4 de la figure 1 par le fait que l'affichage électronique 10 a sa surface supérieure affleurée à la face supérieure du noyau 24. Contrairement à la variante précédente, le matériau 26 ne doit pas ici être transparent. Le matériau 26 peut être apportée sous forme liquide dans une presse ou une installation d'injection, comme pour le noyau 4 de la figure 1. Dans un autre procédé de fabrication du noyau 24, l'affichage électronique 10 peut être inséré dans une coque ayant un logement préformé ou dans l'ouverture d'une couche formant le noyau 24, lequel peut être formé par une ou plusieurs couches assemblées notamment par laminage ou par collage sous presse. De manière à avoir un support uniforme et plat pour l'impression du motif 14, il est prévu d'agencer un film transparent 30 à la surface supérieure du noyau 24. Sur la face supérieure de ce film 30 est déposée une couche d'encre ou de verni 16 en laissant une fenêtre pour l'affichage électronique 10. Sur cette couche de fond 16 est imprimé le motif 14, notamment par une technique Offset. Un film transparent externe 12 est ensuite assemblé au film imprimé 30. Il est prévu une fine couche de colle ou de résine entre le film imprimé 30 et le film externe 12 pour augmenter l'adhérence entre ces deux films transparents. Du côté de la face inférieure de la carte 22, il est prévu d'agencer contre le noyau une couche opaque 32 à la surface inférieure de laquelle est imprimé un motif 20. Ce motif 20 est ensuite recouvert par un film transparent externe 18 au moyen d'une fine couche de colle ou de résine 36.

Hormis les problèmes liés à l'épaisseur de la carte 22, on a constaté dans le cadre du développement de la présente invention que les réalisations des cartes 2 et 22 ne permettent pas de résoudre de manière efficace le problème soulevé précédemment, à savoir le problème de diminution de contraste et de faible intensité des couleurs dû à la présence d'une couche ou d'un film transparent à l'arrière des motifs imprimés 14. Deux problèmes majeurs apparaissent avec les réalisations décrites ci-avant à l'aide des figures 1 et 2.

Premièrement, le dépôt de la couche 16 par une technique d'impression ne permet pas d'obtenir un fond parfaitement opaque. Divers essais ont montrés qu'il est nécessaire de déposer plusieurs couches notamment par sérigraphie pour obtenir un fond opaque permettant d'obtenir un aspect visuel satisfaisant pour des cartes de haute qualité. De plus, les encres ou vernis permettant d'obtenir cette couche de fond opaque 16 sont notamment du type à deux composants. De tels encres ou vernis ont un temps de séchage relativement lent, ce qui pose plusieurs problèmes de fabrication. Ainsi, le temps nécessaire à l'impression ou au dépôt de plusieurs couches de verni ou d'encre pour former la couche de fond opaque demande un temps considérable. Ceci pose alors un problème de stockage lors des périodes de séchage de chaque impression ou dépôt d'encre ou de verni. Il en résulte un procédé de fabrication relativement onéreux et demandant de grande capacité de stockage. Un tel stockage n'est d'ailleurs pas aisé étant donné que les films imprimés ne doivent pas être touchés pendant les périodes de séchage.

Le deuxième problème majeur est un problème d'adhérence de la couche externe transparente 12 dans les cartes terminées 2 et 22. Les motifs 14 réalisés notamment par une technique d'impression du type Offset adhérent relativement mal au film plastique transparent 12. Pour augmenter l'adhérence de cette couche externe, on prévoit généralement que le motif imprimé 14 soit recouvert d'une fine couche de colle ou de résine présentant une bonne adhérence au film plastique transparent utilisé. Si l'on assemble, notamment par laminage les deux couches inférieures 32 et 18 de la carte 22 entre lesquelles est prévu un motif imprimé 20 et une fine couche de colle 36, on observe que l'adhérence entre les couches 32 et 18 est suffisante. On a observé que ceci provient du fait que la colle 34 pénètre légèrement dans le motif imprimé et établit une multitude de points d'ancrage avec la couche ou le film sur lequel le motif 20 a été imprimé. En d'autres termes, le motif imprimé 20 est suffisamment perméable à la colle pour que celle-ci puisse former une réelle interface d'adhérence entre les deux couches ou films plastiques. On observe le même effet dans le cas d'une carte similaire à celle de la figure 1 ou seuls les motifs imprimés 14 et 20 sont prévus. En sélectionnant une résine 6 présentant une bonne adhérence aux couches transparentes 12 et 18, ces couches présentent une adhérence suffisante au noyau 4 grâce à une certaine pénétration de la résine 6 dans les motifs imprimés 14 et 20 lors de l'opération d'assemblage par laminage d'une telle carte. On constate donc que la présence de la couche de fond forme une barrière à la colle ou à la résine de sorte que celle-ci ne peux plus assurer l'adhérence correcte de la couche 12 dans les cartes 2 et 22, respectivement de la couche 18 dans la carte 2.

Le document EP 1 437 683 décrit deux modes de réalisation d'une carte électronique avec un dispositif d'affichage respectivement montrés aux figures 3A et 3B (Fig. 3A ; Fig. 3B) de ce document. Le premier mode de réalisation est du type décrit précédemment et présente un dispositif d'affichage entièrement incorporé dans un noyau au-dessus duquel s'étend une couche plastique de protection continue et homogène (204), laquelle ne peut être que transparente comme le suggère la figure 3A. La problématique exposée ci-avant s'applique donc à ce premier mode de réalisation. Le deuxième mode de réalisation de la figure 3B propose une carte avec un dispositif d'affichage agencé sur un support inférieur, ce dispositif d'affichage présentant un substrat supérieur transparent (associé à une contre-électrode de la cellule d'affichage lorsqu'il s'agit d'une cellule à cristaux liquide) comme le montre cette figure 3B. Ce substrat supérieur du dispositif d'affichage est introduit partiellement dans une ouverture d'une feuille plastique opaque supérieure de manière que la surface supérieure du dispositif d'affichage soit affleurée avec la surface externe de cette feuille plastique. Une telle réalisation pose des problèmes de fabrication, notamment pour l'introduction du dispositif d'affichage dans l'ouverture de la feuille plastique, et de qualité de la carte électronique. En effet, étant donné les tolérances de fabrication et l'apport d'une résine pour former le noyau central, il y a un risque élevé de fente entre le substrat supérieur du dispositif d'affichage et le bord de l'ouverture. La résine peut donc aisément couler dans une telle fente. On remarquera encore qu'il est difficile d'affleurer parfaitement la surface supérieure du dispositif d'affichage avec la surface externe de la couche plastique supérieure de sorte que la surface extérieure de la carte aura régulièrement un problème de planéité. Ceci est en particulier amplifié par le fait qu'il faut éviter dans une telle réalisation de presser sur la surface supérieure du dispositif d'affichage (ce qui empêche pratiquement un laminage classique avec application d'une pression sur toute la surface de la carte électronique, puisque sinon il y a un fort risque d'endommager le dispositif d'affichage). Finalement, dans ce deuxième mode de réalisation du document EP 1 437 683, on notera que le dispositif d'affichage n'est pas protégé une fois les cartes terminées.

Le document US 2005/0045729 de l'art antérieur décrit divers modes de réalisation de cartes électroniques et leur procédé de fabrication

Le document US 6176430décrit une carte en plastique dans laquelle on incorpore une loupe pour permettre à l'utilisateur de lire des informations écrites sur un autre support.

### Résumé de l'invention

Après avoir mis en lumière les divers problèmes mentionnés ci-dessus dans le cadre des solutions antérieures envisagées, représentées notamment aux figures 1 et 2, la présente invention a pour but de proposer une solution permettant de résoudre les problèmes susmentionnés et d'obtenir une carte avec un affichage électronique incorporé à l'intérieur de celle-ci, tout en ayant un motif imprimé sur sa face supérieure qui soit de très bonne qualité.

A cet effet, la présente invention a pour objet une carte telle que décrite à la revendication 1. La présente invention concerne également un produit intermediaire tel que décrit à la revendication 13, un procédé de fabrication d'un produit intérmediaire décrit à la revendication 15 et un procédé de fabrication en lot d'une pluralité de cartes électroniques décrit à la revendication 19.

Dans une variante principale, la couche plastique forme un support d'impression pour au moins un motif imprimé sur la partie opaque de cette couche plastique. De préférence, le matériau opaque est de couleur blanche.

Dans une variante préférée, la couche plastique est formée d'une feuille constituée dudit matériau opaque dans laquelle une ouverture a été effectuée dans la région d'affichage. Une plaquette transparente est agencée dans cette ouverture. Cette plaquette présente de préférence une épaisseur sensiblement égale à celle de la feuille opaque.

### Brève description des dessins

La présente invention sera décrite de manière plus détaillée à l'aide de la description suivante, faite en référence aux dessins annexés, donnés à titre d'exemple nullement limitatif, dans lesquels :
- les figures 1 et 2 montrent respectivement deux coupes transversales de cartes réalisées selon un procédé antérieur à la présente invention ;
- la figure 3 est une coupe transversale d'une carte selon la présente invention ;
- la figure 4 montre une variante de réalisation de la carte selon l'invention ;
- la figure 5 montre une feuille opaque ajourée intervenant dans la formation de la carte des figures 3 et 4 ;
- la figure 6 représente schématiquement une première variante de réalisation d'une feuille opaque imprimée présentant des fenêtres remplies par un matériau transparent ; et
- la figure 7 représente la formation d'une partie de la carte représentée à la figure 3 et réalisée selon un procédé de fabrication spécifique.

### Description détaillée

A la figure 3 est représenté un mode de réalisation d'une carte selon l'invention. Cette carte 38 comprend un noyau 4, similaire au noyau de la carte 2 de la figure 1, dans lequel sont noyés une unité électronique 8 et un affichage électronique 10. Le noyau 4 est formé par une résine transparente 6, laquelle recouvre également l'affichage électronique 10. Les éléments électroniques sont ainsi enrobés dans la résine 6 qui définit un noyau compact présentant deux faces sensiblement planes. On notera que dans d'autres variantes de réalisation du noyau, les éléments électroniques sont seulement recouverts par la résine sans être entièrement enrobés par celle-ci.

Sur le noyau 4 est agencé une couche 40 formée d'une part par un matériau opaque 42 et d'autre part par un matériau transparent 44 prévu au-dessus de l'affichage électronique 10 de manière à ce qu'il soit visible depuis l'extérieur de la carte 38. La couche 40 a sa majeure partie 42 formée du matériau opaque, de préférence de couleur blanche. Seule une ouverture 46 définie par la partie opaque 42 dans la région d'affichage située au dessus de l'affichage électronique 10 est remplie par une partie transparente 44. Cette ouverture 46 définit une fenêtre dont les dimensions sont prévues pour que seule la partie servant à l'affichage de caractères, de chiffres ou d'autres motifs de l'unité d'affichage 10 soit visible. La partie transparente 44 présentant une épaisseur sensiblement égale à celle de la partie opaque 42. Ainsi, en dehors de la fenêtre 46, la couche 40 définit un fond clair parfaitement opaque pour l'impression de motifs 14 sur la surface supérieure de la couche 40. De préférence l'impression du motif 14 est réalisée par une technique du type Offset. Sur la couche imprimée 40 est agencée une couche externe transparente 12 qui est assemblée à cette couche imprimée 40 à l'aide d'une fine couche de colle 34 permettant d'assurer une bonne adhérence de cette couche externe 12 à la couche intermédiaire 40. Comme exposé précédemment, étant donné que seule l'impression d'un motif est nécessaire, en particulier dans une installation d'impression Offset, la fine couche de colle définit réellement une interface d'adhérence entre les couches 40 et 12. Les problèmes mentionnés relativement aux cartes 2 et 22 de l'art antérieur sont ainsi solutionnés par la carte 38 selon l'invention.

Pour obtenir une carte symétrique avec également une impression de bonne qualité sur la face inférieure de la carte, il est prévu d'apporter une couche opaque 32 à la surface inférieure de laquelle est imprimé un motif 20. Ensuite une couche externe transparente 18 revêtue d'une fine couche de colle 36 est apportée contre la feuille imprimée 32. Le tout est assemblé par laminage dans une presse ou à l'aide de rouleaux de laminage. On obtient ainsi des cartes ayant un affichage électronique intégré à l'intérieur de la carte et visible au travers de couches ou films transparents, tout en ayant à l'extérieur de la région d'affichage une impression sur une couche opaque relativement épaisse permettant d'obtenir un très bon contraste et une bonne intensité des couleurs. On notera qu'il est envisageable d'avoir un affichage électronique à la face inférieure de la carte ou des deux côtés de la carte.

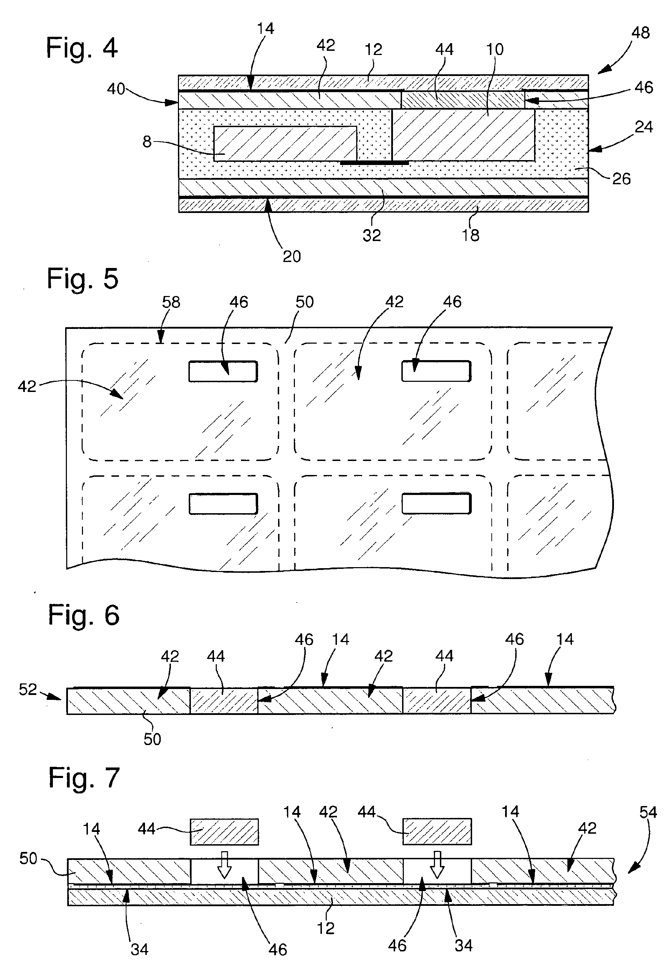

La carte 48 représentée en coupe à la figure 4 est une variante de réalisation à partir d'un noyau 24 similaire à celui de la carte 22 représenté à la figure 2. Sur la face supérieure du noyau 24 est agencée une couche 40 en matériau plastique dont la majeure partie 42 est constituée d'un matériau opaque. Dans la région d'affichage situé au-dessus de l'unité d'affichage 10, la couche 40 comprend une partie 44 formée d'un matériau transparent. Un motif imprimé 14 est prévu sur la partie opaque 42. La couche imprimée 40 est recouverte d'un film transparent 12. Dans cette variante, il n'est pas prévu de fine couche de colle entre la couche 40 et le film 12. Toutefois, dans une autre variante, un tel film servant d'interface d'adhérence peut être agencé entre cette couche 40 et le film externe 12. On remarquera qu'il est également possible de prévoir une fine couche de résine ou de colle entre la couche plastique 40 et le noyau 24 de manière à assurer une bonne adhérence de la partie transparente 44 avec l'affichage électronique 10. Cette fine couche de colle est avantageusement appliquée sur la face inférieure de la couche 40 avant l'assemblage au noyau 24. Cette fine couche de colle peut alternativement être préalablement déposée sur la surface supérieure du noyau 24 ou être apportée sous forme d'une fine feuille agencée entre la couche 40 et le noyau 24. Ces différentes alternatives et variantes s'appliquent également pour l'agencement d'une fine couche de colle ou de résine entre la couche 40 et la couche externe 12.

Le motif 14 peut être imprimé, dans une variante, sur la face inférieure du film transparent 12. On positionne alors ce film transparent de manière que le motif imprimé 14 soit situé en regard de la partie opaque 42.

Du côté de la surface inférieure du noyau 24 sont agencés une couche opaque 32 et un film externe transparent 18 entre lesquelles est prévu un motif imprimé 20.

On remarquera que les films transparents externes 12 et 18 peuvent être remplacés par exemple par une laque transparente ou tout autre matériau transparent permettant de protéger les motifs imprimés 14 et 20.

A la figure 5 est représentée une feuille plastique ajourée 50 servant à la formation de la couche 40 d'une pluralité de cartes fabriquées en lot. Le contour 58 des cartes, obtenues après découpage du lot de cartes terminées, est représenté par une ligne interrompue. Pour chaque carte prévue, la feuille 50 présente une ouverture 46. La majeure partie 42 est formée par le matériau opaque de la feuille 50, notamment du PVC. L'impression de motifs 14 prévue sur cette feuille peut être réalisée soit avant d'effectuer les ouvertures 46, soit après cette opération. Une impression antérieure permet d'avoir un motif imprimé qui entoure parfaitement l'ouverture prévue pour chaque carte.

A la figure 6 est représenté un produit intermédiaire 52 intervenant dans un premier mode de mise en oeuvre d'un procédé de fabrication de carte selon l'invention.

Le produit intermédiaire 52 est formé de la feuille 50, représenté à la figure 5, qui définit une pluralité de parties opaques 42 d'une pluralité de cartes correspondantes. Dans les ouvertures 46 de la feuille 50 sont agencés des parties transparentes 44, ayant sensiblement une même épaisseur que les parties 42, de manière à former un produit intermédiaire 52 définissant une structure plane. Une pluralité de motifs 14 est imprimée sur la face supérieure de la feuille 50. Les parties transparentes 44 sont formées de préférence par des plaquettes découpées dans une feuille transparente et introduite dans les ouvertures 46. Les plaquettes 44 peuvent être obtenues d'autres manières connues de l'homme du métier.

Pour assurer le maintien en place des plaquettes 44 jusqu'à l'étape de laminage aux noyaux des cartes fabriquées, l'homme du métier peut utiliser diverses techniques d'assemblage. Par exemple, il est possible d'effectuer quelques points de soudure à l'aide d'une simple pointe chauffée, appliquée sur le bord des ouvertures 46. Le matériau plastique fond localement, ce qui engendre des points de soudure et donc un assemblage des plaquettes 44 à la feuille 50. Ces points de soudure sont effectués de préférence sur la face inférieure de la feuille 50, c'est-à-dire du côté opposé à la face imprimée. Cependant, il est possible d'effectuer également avec soin de tels points de soudure du côté de la face imprimée en particulier lorsque l'impression est réalisée ultérieurement. Il est également possible de faire tenir les plaquettes 44 à l'aide d'une colle. Cette étape de collage pour assurer un maintien des plaquettes transparentes 44 peut être combinée avec le dépôt d'une fine couche de colle sur la surface inférieure ou/et la surface supérieure du produit intermédiaire 52. Les plaquettes transparentes 44 peuvent également être assemblées à la feuille ajourée 50 dans une étape de laminage. On notera qu'un tel laminage peut aussi être prévu en plus de l'assemblage ponctuel mentionné ci-avant. L'apport de chaleur permet ainsi de souder au moins partiellement les faces latérales des plaquettes à la paroi des ouvertures correspondantes 46 et d'obtenir une couche plane et uniforme. Celle-ci peut ensuite être utilisée dans un procédé de formation de cartes à relativement faible température.

Le produit intermédiaire 52 est particulièrement avantageux pour un procédé où l'impression des motifs 14 est prévue suite à l'assemblage de la feuille opaque aux plaquettes transparentes, cette impression pouvant alors éventuellement recouvrir partiellement ces plaquettes transparentes.

Les parties transparentes 44 peuvent, dans un autre mode de réalisation de cartes selon l'invention, être obtenues par injection d'un matériau transparent dans les fenêtres 46.

A la figure 7 est représenté en coupe un autre produit intermédiaire 54 obtenu dans le cadre d'un deuxième mode de mise en oeuvre d'un procédé de fabrication de cartes selon l'invention. Pour obtenir le produit intermédiaire 54, on imprime premièrement la feuille opaque 50 pour obtenir une pluralité de motifs 14. Ensuite, un film transparent 12 recouvert d'une couche de colle 34 est apporté contre la feuille 50 du côté des motifs imprimés 14. On assemble alors la feuille imprimée 50 avec le film transparent 12 et on obtient des logements formés par les ouvertures 46 présentant à leur fond la couche de colle 34. Les plaquettes transparentes 44 sont ensuite introduites dans les ouvertures 46 et fixées au film 12 par l'intermédiaire de la couche de colle chauffée localement par exemple. On obtient ainsi un produit intermédiaire 54 qui peut être ensuite assemblé à des noyaux 4 ou 24 pour obtenir des cartes selon la présente invention. On remarquera qu'un tel produit intermédiaire peut aussi être obtenu sans la couche de colle. Dans ce dernier cas, l'assemblage temporaire se fait par point de soudage d'un côté ou de l'autre, sur le bord des ouvertures ou au centre en soudant les plaquettes au film transparent 12. De préférence, l'ensemble ainsi obtenu est ensuite laminé pour obtenir une structure multicouche bien plane, sans fentes et sans marques résultant éventuellement de l'assemblage temporaire des plaquettes transparentes.

Dans un procédé où le noyau n'est pas réalisé dans une étape préalable, mais est formé simultanément à la formation de la carte entière, le produit intermédiaire 54 est alors utilisé comme structure multicouche supérieure agencée, dans l'installation de laminage (presse planes ou rouleaux), sur une résine dans un état liquide visqueux servant à former un noyau central incorporant les éléments électroniques. Une feuille ou une structure multicouche inférieure est généralement agencée sous la résine apportée dans cette installation de laminage. Cette structure multicouche inférieure peut être formée en particulier par les couches 18 et 32 assemblée au préalable, comme représentées à la figure 3 ou 4. Les structures multicouches inférieure et supérieure sont généralement laminées à relativement haute température, mais la carte entière est finalement réalisée de préférence à une température peu élevée ou à température ambiante, notamment pour ne pas détériorer les éléments électroniques.

On remarquera finalement que la partie transparente 44 de la couche plastique 40 peut avoir diverses fonctions optiques, notamment de polarisation ou de filtre, et avoir subi divers traitements, notamment un traitement antireflet. Dans une variante avantageuse, cette partie transparente définit une lentille de Fresnel ; ce qui donne un effet de loupe. Ces fonctions ou traitement optiques servent prioritairement à augmenter le confort de lecture de l'affichage électronique. Toutefois, ils peuvent aussi servir à donner un certain aspect visuel ou esthétique.

## Revendications

1. Carte (38 ; 48) comprenant un affichage électronique (10), agencé intégralement dans un noyau (4 ; 24) de cette carte, et une couche plastique (40) située au-dessus du noyau et recouvrant ce noyau,
**caractérisée en ce que** ladite couche plastique est formée par une feuille plastique opaque (50) présentant une ouverture et par une plaquette transparente logée dans cette ouverture, la plaquette transparente étant située au-dessus dudit affichage électronique.

2. Carte selon la revendication 1, **caractérisée en ce que** ladite couche plastique est agencée directement sur la face supérieure dudit noyau.

3. Carte selon la revendication 1, **caractérisée en ce qu'**une fine couche de colle est située entre ledit noyau et ladite couche plastique.

4. Carte selon la revendication 2 ou 3, **caractérisée en ce que** ledit noyau comprend une unité électronique (8), ledit affichage électronique et une résine dans laquelle sont noyés cette unité électronique et cet affichage électronique.

5. Carte selon la revendication 4, **caractérisée en ce que** ladite résine est transparente et recouvre ledit affichage électronique.

6. Carte selon la revendication 4, **caractérisée en ce que** ledit affichage électronique a sa surface supérieure affleurée à la face supérieure dudit noyau.

7. Carte selon l'une quelconque des revendications précédentes, **caractérisée en ce que** ladite couche plastique présente une épaisseur sensiblement constante.

8. Carte selon l'une quelconque des revendications précédentes, **caractérisée en ce qu'**elle comprend un film externe transparent (12) agencé sur ladite couche plastique, et **en ce qu'**un motif (14) est imprimé sur ladite première partie (42) de la couche plastique du côté du film externe transparent ou sur la face intérieure du film externe transparent de manière que le motif imprimé soit situé en regard de la feuille plastique opaque.

9. Carte selon l'une quelconque des revendications 1 à 7, **caractérisée en ce que** ladite couche plastique est recouverte par un film externe transparent (12).

10. Carte selon la revendication 8 ou 9, **caractérisée en ce qu'**une couche de colle est située entre la couche plastique et le film externe transparent.

11. Carte selon l'une quelconque des revendications précédentes, **caractérisée en ce que** ladite plaquette transparente présente un effet de loupe.

12. Carte selon la revendication 11, **caractérisée en ce que** ladite plaquette transparente de la couche plastique définit une lentille de Fresnel.

13. Produit intermédiaire (52; 54) pour une fabrication de cartes électroniques fabriquées en lot, comprenant chacune un noyau (4; 24) incorporant un affichage électronique (10), dans laquelle ce produit intermédiaire peut être assemblé aux noyaux respectifs des cartes électroniques fabriquées en lot et recouvrir ces noyaux, ce produit intermédiaire étant **caractérisé en ce qu'**il comprend une feuille plastique opaque (50) présentant une pluralité d'ouvertures (46) qui définissent des fenêtres pour une pluralité correspondante d'affichages électroniques desdites cartes électroniques fabriquées en lot, et **en ce qu'**il comprend également une pluralité de plaquettes transparentes (44) logées respectivement dans ladite pluralité d'ouvertures et solidaires de ladite feuille plastique opaque.

14. Produit intermédiaire (54) selon la revendication 13, **caractérisé en ce qu'**il présente sur une face de ladite feuille plastique opaque une pluralité de motifs imprimés (14), et **en ce qu'**il comprend un film transparent (12) assemblé à cette feuille plastique opaque du côté de la pluralité de motifs imprimés.

15. Procédé de fabrication d'un produit intermédiaire selon la revendication 13, **caractérisé en ce que** chaque plaquette transparente est préformée et introduite, dans une ouverture correspondante de ladite pluralité d'ouvertures, chaque plaquette transparente étant maintenue dans chaque ouverture correspondante par soudage, par collage ou suite à un laminage.

16. Procédé de fabrication selon la revendication 15, **caractérisé en ce que** qu'un film transparent (12) recouvert d'une couche de colle (34) est apporté contre une face de ladite feuille plastique opaque (50) et assemblé à celle-ci par cette couche de colle, cette dernière servant également à maintenir les plaquettes transparentes (44) dans ladite pluralité d'ouvertures.

17. Procédé de fabrication selon la revendication 16, **caractérisé en ce que**, avant l'apport dudit film transparent contre ladite feuille plastique opaque, ladite face de cette dernière est imprimée pour obtenir une pluralité de motifs imprimés (14).

18. Procédé de fabrication d'un produit intermédiaire selon l'une quelconque des revendications 14, 16 et 17, **caractérisé en ce que** l'ensemble formé par ladite feuille opaque, ledit film transparent et lesdites plaquettes transparentes est laminé et définit ensuite une structure multicouche plane.

19. Procédé de fabrication en lot d'une pluralité de cartes électroniques comprenant chacune un affichage électronique (10), ce procédé comprenant une étape de formation d'un produit intermédiaire présentant une pluralité de fenêtres et une étape de formation d'une pluralité de noyaux incorporant les affichages électroniques respectifs de la pluralité de cartes électroniques, le produit intermédiaire étant fabriqué dans une étape préliminaire à son assemblage avec la pluralité de noyaux et réalisé de manière que la pluralité de fenêtres soient situées en regard de la pluralité d'affichages électroniques lors de cet assemblage, **caractérisé en ce que** le produit intermédiaire (52 ; 54) est formé d'une feuille plastique opaque (50), présentant une pluralité d'ouvertures (46) définissant ladite pluralité de fenêtres pour lesdits affichages électroniques, et d'une pluralité de parties transparentes (44) respectivement agencées dans ladite pluralité d'ouvertures de manière à être solidaires de ladite feuille plastique opaque.

20. Procédé de fabrication selon la revendication 19, **caractérisé en ce que** ladite pluralité de noyaux est formée préalablement à l'assemblage de celle-ci avec ledit produit intermédiaire.

21. Procédé de fabrication selon la revendication 19, caractérisé en la pluralité de noyaux est formée simultanément à l'assemblage du produit intermédiaire avec cette pluralité de noyaux dans une installation de laminage.

22. Procédé de fabrication selon l'une quelconque des revendications 19 à 21, **caractérisé en ce que** chaque partie transparente de ladite pluralité de parties transparentes est formée par une plaquette transparente.

23. Procédé de fabrication selon l'une quelconque des revendications 19 à 22, **caractérisé en ce que** le produit intermédiaire (54) présente sur une face de ladite feuille plastique opaque une pluralité de motifs imprimés (14), et **en ce qu'**il comprend en outre un film transparent (12) assemblé à cette feuille plastique opaque du côté de la pluralité de motifs imprimés.

## Patentansprüche

1. Karte (38; 48), die eine elektronische Anzeige (10), die einteilig in einem Kern (4; 24) dieser Karte angeordnet ist, und eine Kunststoffschicht (40), die sich über dem Kern befindet und diesen Kern abdeckt, umfasst,
**dadurch gekennzeichnet, dass** diese Kunststoffschicht durch eine lichtundurchlässige Kunststofffolie (50), die eine Öffnung aufweist, und durch ein lichtdurchlässiges Plättchen, das sich in dieser Öffnung befindet, gebildet ist, wobei sich das lichtdurchlässige Plättchen über der elektronischen Anzeige befindet.

2. Karte nach Anspruch 1, **dadurch gekennzeichnet, dass** die Kunststoffschicht direkt auf der oberen Fläche des Kerns angeordnet ist.

3. Karte nach Anspruch 1, **dadurch gekennzeichnet, dass** sich zwischen dem Kern und der Kunststoffschicht eine dünne Klebstoffschicht befindet.

4. Karte nach Anspruch 2 oder 3, **dadurch gekennzeichnet, dass** der Kern eine elektronische Einheit (8), die elektronische Anzeige und ein Harz, in das die elektronische Einheit und die elektronische Anzeige eingebettet sind, umfasst.

5. Karte nach Anspruch 4, **dadurch gekennzeichnet, dass** das Harz lichtdurchlässig ist und die elektronische Anzeige abdeckt.

6. Karte nach Anspruch 4, **dadurch gekennzeichnet, dass** die obere Oberfläche der elektronischen Anzeige mit der oberen Fläche des Kerns bündig ist.

7. Karte nach einem der vorhergehenden Ansprüche, **dadurch gekennzeichnet, dass** die Kunststoffschicht eine im Wesentlichen konstante Dicke aufweist.

8. Karte nach einem der vorhergehende Ansprüche, **dadurch gekennzeichnet, dass** sie einen lichtdurchlässigen äußeren Film (12) umfasst, der auf der Kunststoffschicht angeordnet ist und dass auf den ersten Teil (42) der Kunststoffschicht auf Seiten des lichtdurchlässigen äußeren Films oder auf die innere Fläche des lichtdurchlässigen äußeren Films ein Muster (14) gedruckt ist, derart, dass sich das gedruckte Muster gegenüber der lichtundurchlässigen Kunststofffolie befindet.

9. Karte nach einem der Ansprüche 1 bis 7, **dadurch gekennzeichnet, dass** die Kunststoffschicht durch einen lichtdurchlässigen äußeren Film (12) abgedeckt ist.

10. Karte nach Anspruch 8 oder 9, **dadurch gekennzeichnet, dass** sich eine Klebstoffschicht zwischen der Kunststoffschicht und dem lichtdurchlässigen äußeren Film befindet.

11. Karte nach einem der vorhergehenden Ansprüche, **dadurch gekennzeichnet, dass** das lichtdurchlässige Plättchen eine Lupenwirkung hat.

12. Karte nach Anspruch 11, **dadurch gekennzeichnet, dass** das lichtdurchlässige Plättchen der Kunststoffschicht eine Fresnel-Linse definiert.

13. Zwischenprodukt (52; 54) für eine Fertigung von losweise gefertigten elektronischen Karten, die jeweils einen Kern (4; 24), der eine elektronische Anzeige (10) enthält, enthalten, wobei dieses Zwischenprodukt mit den jeweiligen Kernen losweise gefertigter elektronischer Karten zusammengefügt werden kann und diese Kerne abdecken kann, wobei dieses Zwischenprodukt **dadurch gekennzeichnet, ist, dass** es eine lichtundurchlässige Kunststofffolie (50) umfasst, die mehrere Öffnungen (46) aufweist, die Fenster für eine entsprechende Mehrzahl elektronischer Anzeigen der losweise gefertigten elektronischen Karten definieren, und dass es außerdem mehrere lichtdurchlässige Plättchen (44) umfasst, die sich in den mehreren entsprechenden Öffnungen befinden und mit der lichtundurchlässigen Kunststofffolie fest verbunden sind.

14. Zwischenprodukt (54) nach Anspruch 13, **dadurch gekennzeichnet, dass** es auf einer Fläche der lichtundurchlässigen Kunststofffolie mehrere gedruckte Muster (14) aufweist und dass es einen lichtdurchlässigen Film (12) umfasst, der mit dieser lichtundurchlässigen Kunststofffolie auf Seiten der mehreren gedruckten Muster zusammengefügt ist.

15. Verfahren für die Fertigung eines Zwischenprodukts nach Anspruch 13, **dadurch gekennzeichnet, dass** jedes lichtdurchlässige Plättchen vorgeformt wird und in eine entsprechende Öffnung der mehreren Öffnungen eingesetzt wird, wobei jedes lichtdurchlässige Plättchen in jeder entsprechenden Öffnung durch Schweißen, Kleben oder infolge eines Laminierens gehalten wird.

16. Fertigungsverfahren nach Anspruch 15, **dadurch gekennzeichnet, dass** ein lichtdurchlässiger Film (12), der von einer Klebstoffschicht (34) abgedeckt ist, an eine Fläche der lichtundurchlässigen Kunststofffolie (50) angefügt ist und mit dieser durch diese Klebstoffschicht zusammengefügt ist, wobei diese Letztere außerdem dazu dient, die lichtdurchlässigen Plättchen (44) in den mehreren Öffnungen zu halten.

17. Fertigungsverfahren nach Anspruch 16, **dadurch gekennzeichnet, dass** vor der Anfügung des lichtdurchlässigen Films an der lichtundurchlässigen Kunststofffolie die Fläche dieser Letzteren bedruckt wird, um mehrere gedruckte Muster (14) zu erhalten.

18. Verfahren zum Fertigen eines Zwischenprodukts nach einem der Ansprüche 14, 16 und 17, **dadurch gekennzeichnet, dass** die durch die lichtundurchlässige Folie, den lichtdurchlässigen Film und die lichtdurchlässigen Plättchen gebildete Gesamtheit laminiert wird und anschließend eine ebene Mehrschichtstruktur definiert.

19. Verfahren zum losweisen Fertigen mehrerer elektronischer Karten, wovon jede eine elektronische Anzeige (10) enthält, wobei dieses Verfahren einen Schritt des Bildens eines Zwischenprodukts, das mehrere Fenster aufweist, und einen Schritt des Bildens mehrerer Kerne, die die jeweiligen elektronischen Anzeigen der mehreren elektronischen Karten enthalten, umfasst, wobei das Zwischenprodukt in einem Schritt vor seiner Zusammenfügung mit den mehreren Kernen gefertigt wird und in der Weise verwirklicht ist, dass sich die mehreren Fenster gegenüber den mehreren elektronischen Anzeigen befinden, wenn sie zusammengefügt werden, **dadurch gekennzeichnet, dass** das Zwischenprodukt (52; 54) aus einer lichtundurchlässigen Kunststofffolie (50), die mehrere Öffnungen (46) aufweist, die die mehreren Fenster für die elektronischen Anzeigen definieren, und aus mehreren lichtdurchlässigen Teilen (44), die jeweils in den mehreren Öffnungen angeordnet sind, derart, dass sie mit der lichtundurchlässigen Kunststofffolie fest verbunden sind, gebildet ist.

20. Fertigungsverfahren nach Anspruch 19, **dadurch gekennzeichnet, dass** die mehreren Kerne vor ihrer Zusammenfügung mit dem Zwischenprodukt gebildet werden.

21. Fertigungsverfahren nach Anspruch 19, **dadurch gekennzeichnet, dass** die mehreren Kerne gleichzeitig mit der Zusammenfügung des Zwischenprodukts mit diesen mehreren Kernen in einer Laminierungsanlage gebildet werden.

22. Fertigungsverfahren nach einem der Ansprüche 19 bis 21, **dadurch gekennzeichnet, dass** jeder lichtdurchlässige Teil der mehreren lichtdurchlässigen Teile durch ein lichtdurchlässiges Plättchen gebildet wird.

23. Fertigungsverfahren nach einem der Ansprüche 19 bis 22, **dadurch gekennzeichnet, dass** das Zwischenprodukt (54) auf einer Fläche der lichtundurchlässigen Kunststofffolie mehrere gedruckte Muster (14) aufweist und dass es außerdem einen lichtdurchlässigen Film (12), der mit dieser lichtundurchlässigen Kunststofffolie auf Seiten der mehreren gedruckten Muster zusammengefügt ist, umfasst.

## Claims

1. Card (38; 48) including an electronic display (10), integrally arranged inside a core (4; 24) of said card, and a plastic layer (40) located above the core and covering said core,
**characterized in that** said plastic layer is formed by an opaque plastic sheet (50) having an aperture and by a transparent plate housed inside said aperture, the transparent plate being located above said electronic display.

2. Card according to claim 1, **characterized in that** said plastic layer is arranged immediately on the top face of said core.

3. Card according to claim 1, **characterized in that** a fine layer of adhesive is located between said core and said plastic layer.

4. Card according to claim 2 or 3, **characterized in that** said core includes an electronic unit (8), said electronic display and a resin in which said electronic unit and said electronic display are embedded.

5. Card according to claim 4, **characterized in that** said resin is transparent and covers said electronic display.

6. Card according to claim 4, **characterized in that** the top surface of said electronic display is flush with the top surface of said core.

7. Card according to any of the preceding claims, **characterized in that** said plastic layer has a substantially constant thickness.

8. Card according to any of the preceding claims, **characterized in that** the card includes a transparent external film (12) arranged on said plastic layer, and **in that** a pattern (14) is printed on said first part (42) of the plastic layer on the side of the transparent external film or on the inner face of the transparent external film so that the printed pattern is located facing the opaque plastic film.

9. Card according to any of claims 1 to 7, **characterized in that** said plastic layer is covered by a transparent external film (12).

10. Card according to claim 8 or 9, **characterized in that** a layer of adhesive is located between the plastic layer and the transparent external film.

11. Card according to any of the preceding claims, **characterized in that** said transparent plate has a magnifying effect.

12. Card according to claim 11, **characterized in that** said transparent plate of the plastic layer defines a Fresnel lens.

13. Intermediate product (52; 54) for the manufacture of batch manufactured smart cards, each including a core (4, 24) incorporating an electronic display (10), wherein said intermediate product can be assembled to the respective cores of the batch manufactured smart cards and cover said cores, said intermediate product being **characterized in that** the product includes an opaque plastic sheet (50) having a plurality of apertures (46) which define openings for a corresponding plurality of electronic displays of said batch manufactured smart cards, and **in that** the product also includes a plurality of transparent plates (44) which are respectively housed inside said plurality of apertures and integral with said opaque plastic sheet.

14. Intermediate product (54) according to claim 13, **characterized in that** on one side of said opaque plastic sheet said product has a plurality of printed patterns (14), and **in that** the product includes a transparent film (12) assembled to said opaque plastic sheet on the side of the plurality of printed patterns.

15. Method for manufacturing an intermediate product according to claim 13, **characterized in that** each transparent plastic plate is pre-formed and inserted into a corresponding aperture of said plurality of apertures, each transparent plate being held in each corresponding aperture by welding, by adhesive bonding or following lamination.

16. Manufacturing method according to claim 15, **characterized in that** a transparent film (12) covered with a layer of adhesive (34) is placed against one face of said opaque plastic sheet (50) and assembled thereto by said layer of adhesive, said layer of adhesive also serving to hold the transparent plates (44) in said plurality of apertures.

17. Manufacturing method according to claim 16, **characterized in that**, prior to the placing of said transparent film against said opaque plastic sheet, said face of said sheet is printed to obtain a plurality of printed patterns (14).

18. Method for manufacturing an intermediate product according to any of claims 14, 16 and 17, **characterized in that** the assembly formed by said opaque sheet, said transparent film and said transparent plates is laminated and then defines a plane, multi-layered structure.

19. Method for the batch manufacture of a plurality of smart cards each including an electronic display (10), said method including a step of forming an intermediate product having a plurality of openings and a step of forming a plurality of cores incorporating the respective electronic displays of the plurality of smart cards, the intermediate product being manufactured in a step preceding the assembly thereof to the plurality of cores and made so that the plurality of openings is located facing the plurality of electronic displays during said assembly, **characterized in that** the intermediate product (52, 54) is formed of an opaque plastic sheet (50), having a plurality of apertures (46) defining said plurality of openings for said electronic displays and of a plurality of transparent parts (44) respectively arranged in said plurality of apertures so as to be integral with said opaque plastic sheet.

20. Manufacturing method according to claim 19, **characterized in that** said plurality of cores is formed prior to the assembly thereof to said intermediate product.

21. Manufacturing method according to claim 19, **characterized in that** said plurality of cores is formed simultaneously with the assembly of the intermediate product to said plurality of cores in a lamination installation.

22. Manufacturing method according to any of claims 19 to 21, **characterized in that** each transparent part of said plurality of transparent parts is formed by a transparent plate.

23. Manufacturing method according to any of claims 19 to 22, **characterized in that** on one face of said opaque plastic sheet the intermediate product (54) has a plurality of printed patterns (14), and **in that** said product further includes a transparent film (12) assembled to said opaque plastic sheet on the side of the plurality of printed patterns.
